# DEMANDE DE BREVET EUROPEEN

(11) **EP 1 308 583 A1**
(43) Date de publication de la demande: **07.05.2003**
(21) Numéro de dépôt: 02079522.5
(22) Date de dépôt: 30.10.2002
(51) Int. Cl.: E04H 17/14, F16B 7/04, F16L 37/00, E04F 11/18

(54) **Dispositif pour rendre solidaire deux pièces tout en permettant l'oscillation de l'une par rapport à l'autre, procédé d'assemblage de ces pièces et barrières comportant de tels dispositifs**

(30) Priorité: 02.11.2001 FR 0114294
(71) Demandeur: Coudert, Michel, 23400 Saint Dizier Leyrenne (FR)
(72) Inventeur: Coudert, Michel, 23400 Saint Dizier Leyrenne (FR)
(74) Mandataire: Richebourg, Michel François

(57) **Abrégé**

L'invention concerne un dispositif pour rendre solidaire une première pièce A avec une seconde pièce B pourvue d'une cavité 2, tout en permettant une oscillation de la pièce A par rapport à la pièce B, le dispositif comportant un corps creux 4 avec des moyens de fixation ME2 adaptés à coopérer avec ladite cavité 2, un élément élastique 3 adapté pour se maintenir et se loger à l'intérieur dudit corps creux 4, et une pièce intermédiaire PR qui coulisse librement dans le volume intérieur dudit corps creux 4 avec frottement de la surface extérieure de ladite pièce sur ledit élément élastique 3, sans contact avec la surface intérieure du corps creux 4, et la pièce PR comporte un moyen de fixation MC1 de manière à fixer la pièce A audit dispositif.

L'invention concerne également le procédé d'assemblage de ces deux pièces A et B au moyen du dispositif selon l'invention, ainsi que les barrières munie de telles dispositifs et les clôtures formées de telles barrières.

## Description

### Secteur technique de l'invention :

La présente invention concerne le secteur technique des dispositifs pour solidariser deux pièces tout en permettant l'oscillation de l'une par rapport à l'autre.

### Art antérieur :

Pour fixer deux pièces, il est possible de réaliser une soudure au niveau des extrémités des pièces ou bien d'introduire des manchons élastiques sur les deux pièces à fixer. Cependant ces systèmes sont rigides une fois que les deux pièces ont été assemblées l'une avec l'autre, et parfois les pièces ne peuvent plus être détachées l'une de l'autre une fois assemblées.

Il n'existe pas actuellement de système permettant de fixer deux éléments, sans qu'ils restent fixés de manière non rigide tout en permettant une oscillation d'un élément par rapport à l'autre. C'est le but que se propose de résoudre la présente invention.

De plus, le dispositif selon l'invention peut être utilisé dans différents assemblages nécessitant la solidarisation de deux pièces tout en permettant une certaine oscillation de l'une des pièces par rapport à l'autre.

Cet avantage trouve particulièrement son application dans différents assemblages, en particulier dans des clôtures ou barrières, qui peuvent alors s'adapter aux inclinaisons des terrains.

Actuellement, on connaît en effet des barrières qui sont le plus souvent assemblées par soudage, de manière à former une clôture. Le problème est que ces clôtures sont rigides et ne peuvent pas, par exemple suivre l'inclinaison du terrain. De plus, l'installation desdites clôtures rigides nécessitent l'utilisation d'outils spécifiques par des professionnels, pour qu'elles s'adaptent aux inclinaisons du terrain.

Il existe donc un besoin important et reconnu pour un dispositif et un procédé permettant de fixer deux éléments tout en permettant l'oscillation de ces deux éléments une fois fixés ensemble, et qui trouvent leurs premières applications dans différents assemblages nécessitant une liberté de mouvement de l'un par rapport à l'autre.

### Résumé de l'invention :

Ainsi, l'objet de la présente invention est de mettre en oeuvre d'une part un dispositif pour la fixation de deux pièces tout en permettant l'oscillation d'une pièce par rapport à l'autre, et d'autre part un procédé pour la mise en oeuvre du dispositif, ainsi que les éléments comportant de tels dispositifs, plus particulièrement les barrières ou clôtures.

### Description détaillée de l'invention :

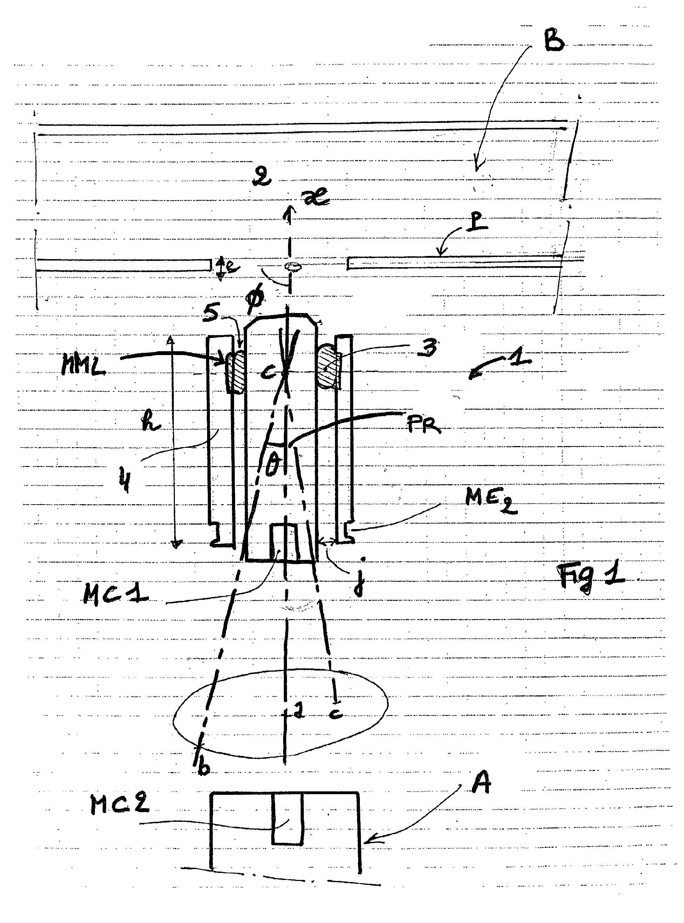

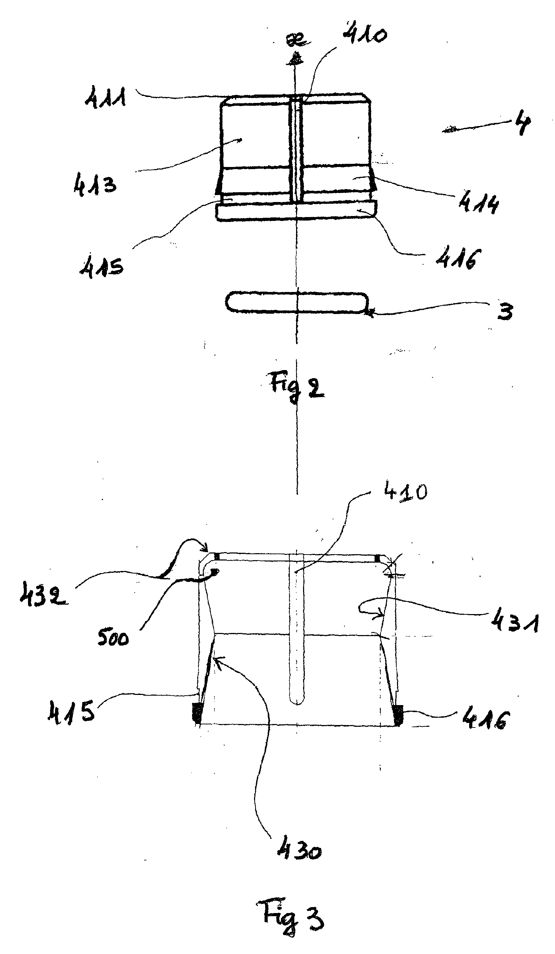

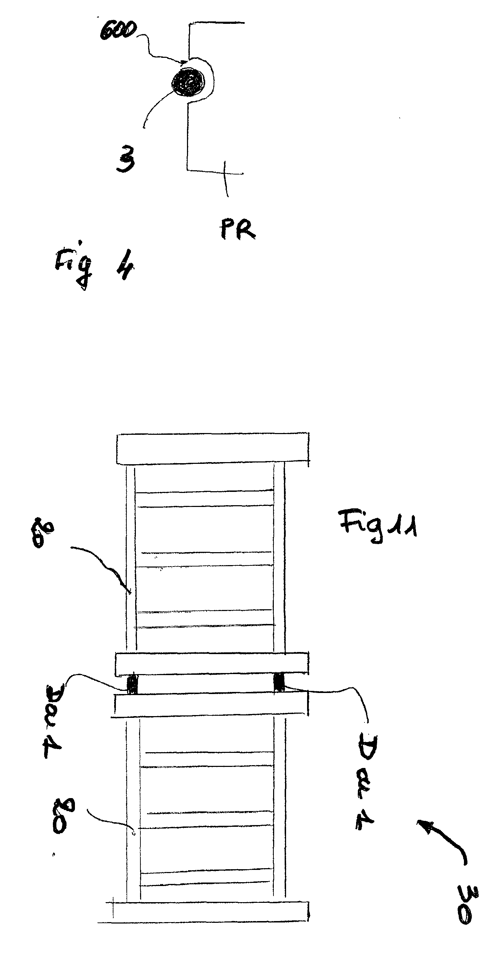

L'invention concerne donc un dispositif pour rendre solidaire une première pièce A avec une seconde pièce B orientée dans le sens x selon un angle φ par rapport à la pièce A, la pièce B étant pourvue d'une cavité 2, tout en permettant une oscillation de la pièce A par rapport à la pièce B caractérisé en ce que ledit dispositif comporte :
- un corps creux 4 de géométrie et de dimensions adaptées à la cavité 2 de telle sorte que ledit corps creux 4 puisse pénétrer et se fixer dans la cavité 2, ledit corps creux 4 comportant des moyens de fixation ME2 adaptés à coopérer avec ladite cavité 2,
- au moins un élément élastique 3 de forme et de géométrie adaptées pour se maintenir et se loger à l'intérieur dudit corps creux 4 et en formant une protubérance 5 hors du corps creux 4, par coopération avec des moyens de maintien et de logement MML prévus sur la surface interne dudit corps creux 4,
- et une pièce intermédiaire PR dont la dimension et la géométrie sont adaptées pour que ladite pièce PR puisse coulisser librement dans le volume intérieur dudit corps creux 4 avec frottement de la surface extérieure de ladite pièce sur ledit élément élastique 3, sans contact avec la surface intérieure du corps creux 4
- ladite pièce intermédiaire PR étant « sensiblement » positionnée dans le volume intérieur du corps 4, et comportant un moyen de fixation MC1 destiné à coopérer avec un moyen de fixation MC2 prévu sur la pièce A, de manière à fixer la pièce A audit dispositif .
   Par " cavité ", on entend le volume intérieur défini dans une pièce B creuse dans laquelle est prévu un orifice O, la pièce B présentant donc deux parois d'épaisseur e, ou bien on entend le volume intérieur défini à l'intérieur d'une pièce B contenant intérieurement de la matière sous réserve que ladite cavité présente une hauteur au moins égale à celle du dispositif selon l'invention .
   Par « sensiblement », on entend que la pièce intermédiaire PR est positionnée de manière à être disposée sur une proportion importante de la hauteur h du corps 4, ou sur une hauteur égale ou supérieure à celle du corps 4, ou bien que la pièce PR dépasse du corps 4 à l'une de ses extrémités supérieures ou inférieures ou aux deux extrémités comme illustré sur la figure 1. De préférence et de manière non limitative, les extrémités de la pièce PR dépassent de la hauteur h du corps 4, pour de meilleures conditions d'oscillation.
   Dans la suite de la description, les termes " avant " et " arrière " sont définis selon la direction de l'axe x (voir figure 2), qui détermine également le sens d'introduction des pièces et éléments dans la cavité 2 de la pièce B.
   Selon les besoins, l'homme du métier comprendra qu'on remplacera respectivement les termes « avant » et « arrière » par « supérieur » et « inférieur » .
   Selon un mode de réalisation préférée, la cavité 2 dans la pièce B est définie comme étant un orifice 2 prévu sur une paroi P d'épaisseur e d'une pièce B creuse .
   De préférence, l'orifice 2 est circulaire et présente un diamètre d.
   Selon un autre mode de réalisation préférée, le corps creux 4 du dispositif selon l'invention comporte une partie d'extrémité avant 411, adaptée pour positionner le dispositif 1 selon l'invention dans la cavité 2 prévue dans la pièce B.
   De préférence, cette extrémité avant 411 est un chanfrein.
   Selon un autre mode de réalisation préférée, le corps creux 4 du dispositif selon l'invention comporte une partie centrale 413, 414, formée d'une partie cylindrique supérieure 413 et d'une partie conique inférieure 414 disposée sous ladite partie 413.
   Dans le cas où la cavité 2 est définie comme un orifice 2 prévu dans la pièce B présentant une paroi P d'épaisseur e, et que l'orifice est circulaire et présente un diamètre d, le diamètre de la partie centrale conique 414 est légèrement supérieur au diamètre d de l'orifice 2 de la pièce B et la partie centrale conique 414 est déformable lors de son introduction dans l'orifice 2 pour s'adapter audit diamètre d.
   Selon un autre mode de réalisation préférée, le corps creux 4 du dispositif selon l'invention comporte une partie d'extrémité arrière supérieure 415 et inférieure 416.
   De préférence, l'extrémité arrière 416 du dispositif 1 selon l'invention est une collerette, qui empêche ledit dispositif de s'encastrer entièrement dans la cavité 2 de la pièce B, lors de la fixation dudit dispositif à la pièce B. La collerette 416 présente un diamètre supérieur au diamètre d de l'orifice 2 de la pièce B.
   Selon un autre mode de réalisation préférée, le corps creux 4 du dispositif selon l'invention 1 comporte sur sa surface externe, au moins une rainure 410 d'élasticité disposée dans l'axe x, la rainure 410 permettant au corps 4 de se déformer pour s'adapter au diamètre d lorsque le dispositif selon l'invention 1 s'encastre dans la cavité 2 de la pièce B.
   De préférence, le corps 4 du dispositif 1 selon l'invention comporte quatre rainures 410, disposées à 90° autour dudit corps.
   De préférence et dans le cas où la pièce B est creuse et pourvue d'un orifice 2 circulaire, le diamètre de la partie centrale conique 414 est supérieure au diamètre de l'orifice 2 et le dispositif 1 selon l'invention devient déformable, grâce à la présence de rainures 410, en particulier au niveau de la partie centrale conique 414 notamment lors de l'introduction du dispositif 1 selon l'invention dans la cavité de la pièce B.
   De ce fait, les rainures 410 sont appelées des rainures d'élasticité, qui ont pour but de rendre le corps 4 du dispositif 1 selon l'invention déformable.
   Selon un autre mode de réalisation préférée, le corps 4 du dispositif 1 selon l'invention comporte sur sa surface externe un moyen de fixation permettant de fixer ledit corps 4 en position dans la cavité 2 de la pièce B.
   De préférence, le moyen de fixation est un filetage, des points de colle, de soudure ou tout autre moyen de fixation connu de l'homme du métier.
   Selon un autre mode de réalisation préférée, le corps 4 du dispositif 1 selon l'invention est constitué en tout matériau, de préférence une matière choisie parmi une matière plastique ,élastique ou métallique (de préférence entre en acier).
   De préférence, la matière plastique utilisée pour le corps 4 est choisie parmi le polyamide 6,6 et le polyacétal. De manière plus préférée, la matière plastique est en polyacétal.
   Selon un autre mode de réalisation préférée, le corps creux 4 du dispositif 1 selon l'invention 4 comporte en outre des moyens de maintien et de logement 430,431,432 prévus sur la surface interne du corps creux 4 et adaptés pour loger et maintenir l'élément élastique 3, au niveau de la jonction 500 dans l'élément supérieur 432 et 431 .
   Selon un mode de réalisation préférée, les moyens de maintien et de logement comporte une partie en cône inférieur 430 de dégagement et une partie représentée par un contre-cône 431 supérieur, ces parties 430, 431 étant adaptées pour maintenir l'élément élastique 3 à l'intérieur du corps creux 4, dans le volume 500 délimité en coopération avec une collerette supérieure 432 .
   La partie 431 représentée par un contre-cône (voir la figure 3) n'est pas un contre-cône mais une forme représentée par une multitude de surfaces circulaires de diamètres, qui ont été lissées par des moyens numériques. Cette forme ne peut pas être décrite par des mots, d'où l'emploi de l'expression "représentée par un contre-cône".
   Cette forme particulière de la partie représentée par un contre-cône sur la figure 3 a fait l'objet de nombreuses études de la part du Déposant.
   Selon un autre mode de réalisation préférée, les moyens de fixation ME2 prévus sur le corps creux 4 représentent une gorge 415.
   De préférence, dans le cas où la pièce B est creuse et pourvue d'un orifice 3 circulaire de diamètre d, ledit orifice 3 étant prévu sur une paroi P d'épaisseur e, la gorge 415 présente une hauteur sensiblement identique à l'épaisseur e de la paroi P de la pièce B de manière à s'encliqueter dans ladite paroi.
   Selon un autre mode de réalisation préférée, le diamètre d de l'orifice correspond sensiblement au diamètre de la gorge 415.
   Ainsi, le dispositif 1 selon l'invention , une fois introduit dans l'orifice 2 de la pièce B pour réaliser la fixation dudit dispositif à la pièce B, sera "clipsé" ou verrouillé dans la pièce B, du fait de la correspondance entre la hauteur des moyens de fixations ME2, le diamètre de l'orifice 2 et l'épaisseur e de la paroi P.
   Selon un mode de réalisation préférée, la pièce intermédiaire PR comporte des moyens de blocage de ladite pièce PR sur l'élément élastique 3, de manière à bloquer de manière réversible la pièce PR par l'élément élastique 3.
   De préférence, les moyens de blocage représentent une gorge 600 ménagée dans ladite pièce PR.
   Par " réversible ", on entend ici que le blocage n'est pas définitif, c'est-à-dire que la pièce intermédiaire PR peut se désengager des moyens de blocage, de manière à ne plus être fixée à l'élément élastique 3.
   Selon un autre mode de réalisation préférée, les moyens de fixation MC1 de la pièce PR représentent un taraudage adapté pour coopérer avec les moyens de fixation MC2 représentant une vis.
   Les pièces A et PR peuvent être reliées par tout moyen de fixation connu de l'homme de métier, à savoir des points de colle, de soudure, deux orifices sur chacune des pièces PR et A, reliés par un goujon intermédiaire, etc...
   Selon un autre mode de réalisation préférée, l'élément élastique 3 est un joint torique, que l'on trouve actuellement dans le commerce.
   De préférence, le joint torique 3 comporte une dureté comprise entre environ 30 et environ 90 shores.
   De préférence, l'élément élastique 3 est une matière élastique, du type caoutchouc naturel ou nitrile ou autres matériaux analogues.
   Selon un autre mode de réalisation préférée, la pièce A et la pièce intermédiaire PR ne forment qu'une seule pièce.
   Selon un autre mode de réalisation préférée, la section transversale de la pièce intermédiaire PR et du corps creux 4 est choisie parmi une section carré, hexagonale, rectangulaire, triangulaire, circulaire, de préférence circulaire et les extrémités de la pièce PR sont choisies parmi des extrémités plates, coniques, tronconiques et toute forme adaptée aux différentes applications selon l'invention.
   Selon un autre mode de réalisation préférée, la pièce B est une barre à parois P planes.
   Selon un autre mode de réalisation préférée, l'angle φ de la pièce B par rapport à la pièce A est compris entre 0° et 180°.
   L'invention concerne également le procédé d'assemblage d'une première pièce A avec une seconde pièce B orientée dans le sens x selon un angle φ par rapport à la pièce A, la pièce B étant pourvue d'une cavité 2, tout en permettant une oscillation de la pièce A par rapport à la pièce B, caractérisé en ce que ledit procédé comporte
- la fixation du dispositif 1 selon l'invention , à la pièce B selon le sens x dans la cavité 2 et la fixation selon le sens x, de la pièce A audit dispositif 1 selon l'invention.
   Une fois que les pièces A et B sont fixées ensemble, l'oscillation de la pièce A par rapport à la pièce B étant assurée par au moins un élément élastique 3 prévu dans ledit dispositif 1, par déformation de cet élément élastique 3, de manière à permettre l'oscillation selon un angle θ de la pièce intermédiaire PR maintenue à l'intérieur dudit dispositif 1 par ledit élément 3.
   L'oscillation de la pièce intermédiaire PR à l'intérieur dudit dispositif selon l'invention avec maintien de ladite pièce PR par au moins un élément élastique 3 défini un axe x qui se déplace sur et à l'intérieur d' un cône définit par un angle θ par rapport à l'axe x et un sommet C.
   La pièce intermédiaire PR oscille entre - θ et + θ.
   Comme l'oscillation est réalisée avec une déformation de l'élément élastique 3, qui dépend de différents paramètres tels que la tolérance de fabrication de dureté de l'élément 3, de la pièce intermédiaire PR et du corps creux 4, ou encore du coefficient d'adhérence de l'extérieur de la pièce PR, le sommet C n'est pas fixe lorsque l'axe x se déplace sur et à l'intérieur du cône.
   L'oscillation entre la pièce A et la pièce B est définie par l'angle θ.
   L'angle θ est fonction de la différence entre le diamètre de la surface interne du corps creux et du diamètre de la surface externe de la pièce intermédiaire PR, définissant un « jeu » j. Il dépend également d'autres paramètres. A titre non limitatif, un de ces paramètres est la dureté de l'élément élastique 3.
   Selon un mode de réalisation préférée, l'angle θ est d'environ 11 °.
   Selon un mode de réalisation préférée, la fixation de la pièce B audit dispositif 1 est précédée de
- l'insertion de l'élément élastique 3 dans les moyens de maintien et de logement prévus sur la surface interne du corps creux dudit dispositif
- puis de l'insertion de la pièce intermédiaire PR , à l'intérieur du corps creux 4 dudit dispositif 1, dans l'élément élastique 3, jusqu'à ce que la pièce intermédiaire PR fasse saillie hors du corps creux 4 dudit dispositif 1.
   Selon un autre mode de réalisation préféré, la fixation du dispositif selon l'invention à la pièce B dans le sens x consiste à
- insérer dans le sens x, le dispositif 1 selon l'invention muni de la pièce intermédiaire PR, dans la cavité 2 de la pièce B et à
- faire coopérer les moyens de fixation ME2 de la pièce intermédiaire PR avec la cavité 2 prévue sur la pièce B.

Selon un mode de réalisation particulier, les moyens de fixation ME2 de la pièce intermédiaire PR coopérant avec ladite cavité 2 sont choisis parmi des moyens de collage, vissage,soudage ou tout autre moyen connu de l'homme du métier .

Selon un autre mode de réalisation particulier, dans le cas où la cavité 2 est un orifice circulaire de diamètre d réalisé dans une paroi P d'épaisseur e d'une pièce B creuse , le corps creux 4 est cylindrique, l'insertion du dispositif 1 selon l'invention dans la cavité 2 de la pièce B a lieu en deux étapes :
1- insertion ensemble et en même temps dans le sens x, de la partie de la pièce intermédiaire PR faisant saillie, de la partie d'extrémité avant 411, du corps creux 4 et de la partie 413 centrale supérieure cylindrique du corps creux 4, dans l'orifice 2 de la pièce B, jusqu'à la frontière délimitée par la partie centrale cylindrique supérieure 413 et la partie centrale conique inférieure 414 du corps creux 4,
2- puis insertion dans le sens x, de la partie centrale conique inférieure 414 déformable à l'intérieur de la cavité 2 de la pièce B, alors que la pièce intermédiaire PR et l'élément élastique 3 restent immobiles, l'insertion de ladite partie 414 s'accompagnant d'une déformation de cette même partie 414 grâce à au moins une rainure 410 prévue sur la surface externe du corps creux 4, cette insertion ayant lieu jusqu'à coopération des moyens de fixation ME2 avec l'orifice 2.

De préférence, l'insertion de la partie centrale conique 414 à l'intérieur de la cavité 2 est réalisée par l'exercice d'une force appliquée sur la partie arrière 416 du corps creux 4.

De préférence, le diamètre de ladite partie conique 414 qui est déformable lors de son introduction dans l'orifice 2 pour s'adapter au diamètre d de l'orifice est supérieur à celui de l'orifice 2.

De préférence, les moyens de fixation ME2 de la pièce intermédiaire PR sont représentées par une gorge 415, la coopération des moyens de fixation ME2 avec l'orifice 2, consiste en ce que le diamètre de l'orifice 2 correspond à celui de la gorge 415 et la hauteur de la gorge 415 est sensiblement identique à l'épaisseur e de la paroi P, ce qui correspond au verrouillage ou " clipsage " du dispositif 1 selon l'invention dans l'orifice 2.

Selon un autre mode de réalisation préférée, la fixation de la pièce A audit dispositif 1 selon l'axe x consiste à fixer la pièce intermédiaire PR à la pièce A, la fixation étant réalisée par la coopération des moyens de fixation MC1 prévus sur la pièce intermédiaire PR avec les moyens de fixation MC2 prévus sur la pièce A.

La fixation de la pièce intermédiaire PR à la pièce A est réalisée par tout moyen connu de l'homme du métier : collage, soudure, vissage, etc...

L'invention concerne également un présentoir flexible, un accessoire de bureaux flexible ou un accessoire automobile flexible comme un appui-tête, une lampe flexible, un bureau ou une table flexibles, un siège flexible, en particulier de bureau, ou une tablette interchangeable flexible comportant au moins un dispositif selon l'invention pour relier au moins une partie des éléments constitutifs de ces produits.

Plus particulièrement, l'invention concerne une barrière flexible de type à barreaux horizontaux et verticaux comportant au moins un dispositif selon l'invention pour assembler les barreaux horizontaux et chacun des barreaux verticaux ou obtenue par assemblage au moyen du procédé selon l'invention.

Par « flexible », on entend que la barrière peut subir des torsions, des inclinaisons correspondant à l'angle θ.

La barrière flexible selon l'invention comporte deux poteaux verticaux 10 et 11 fixables au sol, deux barres horizontales 12 et 13 reliées à chaque poteau vertical et étant munies à chaque extrémité d'un dispositif 1 selon l'invention, et la barrière comporte des barreaux verticaux 15 reliés à chaque barre horizontale 12 et 13 par un dispositif 1 selon l'invention.

L'invention concerne également la clôture 30 flexible comportant au moins deux barrières telles que décrites précédemment, et lesdites barrières sont soit reliées entre elles par au moins un moyen de fixation D rigide choisi par des points de soudure, de colle, etc ... ou soit reliées entre elles par au moins un dispositif 1 selon l'invention.

D'autres caractéristiques et avantages de l'invention seront mieux compris à la lecture de la description qui va suivre, et en se référant aux dessins annexés sur lesquels :
- la figure 1 représente une vue de face du dispositif selon l'invention
- la figure 2 représente une vue de face du corps creux 4 et de l'élément élastique 3 du dispositif selon l'invention
- la figure 3 représente une vue intérieure en coupe du corps creux 4
- la figure 4 représente les moyens de blocage de la pièce intermédiaire PR vue de côté
- les figures 5 à 9 composées des figures 5A, 5B et 5C, 6A, 6B, 7A, 7B, 8A, 8B et 9A et 9B, représentent le procédé d'assemblage de deux pièces A et B au moyen du dispositif 1 selon l'invention
- la figure 10 représente une barrière comportant un dispositif selon l'invention
- la figure 11 représente une clôture 30 formée de deux barrières selon l'invention
- la figure 12 composée des figures 12A et 12B, montre une clôture 30 munie de différentes barrières représentées à la figure 10 ; la figure 12A présente une vue de côté de cette clôture et la figure 12B une vue de dessus de cette même barrière.
- la figure 13 représente un siège, en particulier de bureau comportant un dispositif selon l'invention
- la figure 14 représente une barrière comportant un dispositif selon l'invention inséré dans l'orifice d'une pièce B munie d'un système de détection
- la figure 15 représente une tablette interchangeable munie du dispositif selon l'invention

La figure 1 présente une pièce A muni d'un moyen de fixation MC2 et une pièce B creuse présentant une paroi P d'épaisseur e, dans laquelle est prévu un orifice 2. Les pièces A et B sont disposées de manière orthogonale l'une par rapport à l'autre.

Le dispositif 1 selon l'invention comporte un corps creux 4 comprenant une pièce intermédiaire PR maintenue à l'intérieur du dispositif 1 selon l'invention par un élément élastique 3 qui est logé et maintenu par des moyens de maintien et de logement MML et en formant une protubérance 5. Le corps creux 4 comporte également des moyens de fixation ME2 adaptés pour coopérer avec l'orifice 2 de la pièce B.

La pièce intermédiaire PR fait saillie hors de l'extrémité avant du corps creux 4.

Ladite pièce PR comporte également des moyens de fixation MC2 qui coopèrent avec des moyens de fixation MC1 prévus sur la pièce intermédiaire MC1.

La pièce intermédiaire PR peut osciller selon un angle θ autour d'un axe x défini comme l'axe d'orientation du dispositif 1 et de la pièce A. Sur la figure 1, on voit que l'axe x peut se déplacer sur un cône (position b) et à l'intérieur d'un cône (positions b et c) défini par un angle θ (égal à 11 °) et un sommet C qui n'est pas fixe car se déplace du fait de la déformation de l'élément élastique 3 lors de l'oscillation.

L'oscillation de la pièce intermédiaire PR à l'intérieur du dispositif 1 selon l'invention est rendue possible par la présence de l'élément élastique 3 et permet ainsi l'oscillation de la pièce A par rapport à la pièce B, une fois que les pièces A et B sont reliées ensemble au moyen du dispositif selon l'invention.

La figure 2 présente le corps creux 4 et l'élément élastique 3 du dispositif 1 selon l'invention.

L'axe x défini le sens d'introduction de la pièce A dans la pièce B, et définit ainsi également les termes " avant " et " arrière " ou « supérieur » ou « inférieur ».

Le corps creux 4 est cylindrique avec un diamètre de 28 mm et se compose d'une partie d'extrémité avant 411 (chanfrein) de diamètre 22,20 mm, d'une partie centrale cylindrique supérieure 413 , d'une partie centrale conique inférieure 414 disposée sous ladite partie 413 et l'extrémité arrière de la partie conique 414 possède un diamètre de 28, 60 mm. Le corps creux 4 comporte également dans sa partie inférieure ou arrière une gorge 415 de diamètre 27,80 mm et une collerette 416 de diamètre 33,00 mm .

Le corps creux 4 comporte également quatre rainures 410 (dont une seul est visible sur la figure 2), définies sur la surface externe dudit corps 4. Cette rainure permet de déformer le corps creux 4, en particulier au niveau de la partie conique inférieure 414 lors de la fixation/insertion du dispositif 1 selon l'invention dans l'orifice de la pièce B.

L'élément élastique 3 est un joint torique en nitrile remplissant la norme DIN 3760 : NBR.

La figure 3 présente l'intérieur du corps creux 4 en coupe. Il comporte une partie en cône inférieure 430 suivie d'une partie représentée par un contre-cône supérieur 431, adaptées pour maintenir et loger le joint torique 3 à l'intérieur du corps creux 4 dans le volume 500 délimité en coopération avec une collerette supérieure 432, ce qui empêche le joint 3 de sortir hors de la partie d'extrémité avant 411 du dispositif 1 selon l'invention.

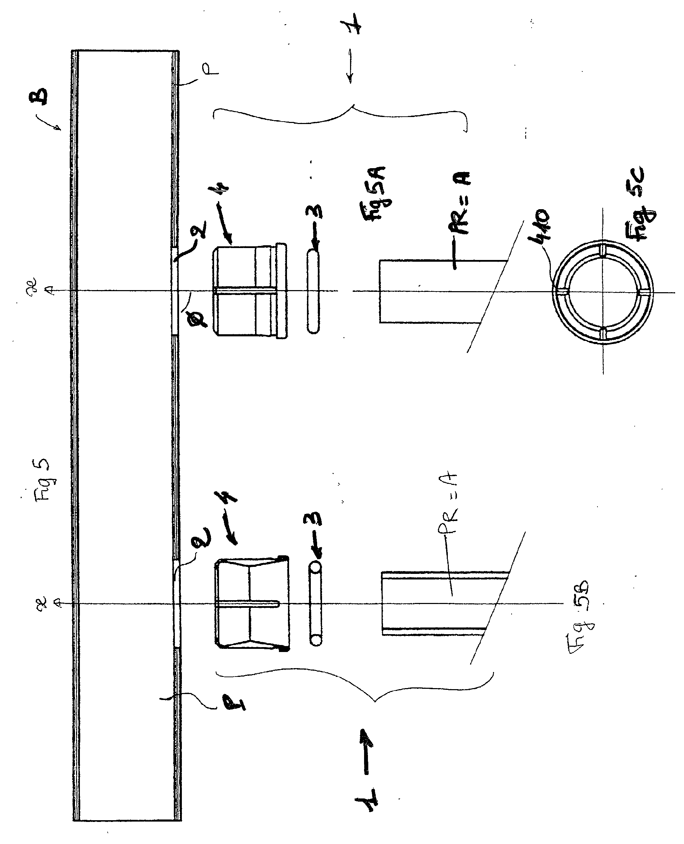

La figure 4 représente les moyens de blocage de la pièce intermédiaire PR vue de côté. Lesdits moyens représentent une gorge 600 ménagée dans la pièce intermédiaire PR.

Les figures 5 à 9 représentent le procédé d'assemblage d'une pièce A avec une pièce B au moyen du dispositif 1 selon l'invention . La pièce intermédiaire PR forme un monobloc avec la pièce PR.

La figure 5A représente la pièce B creuse présentant une paroi P munie d'un orifice 2, un corps creux 4 défini comme sur les figures 2 et 3, un joint torique 3, à assembler. La figure 5B représente ces éléments vus de l'intérieur et la figure 5C une vue de face présentant quatre rainures 410.

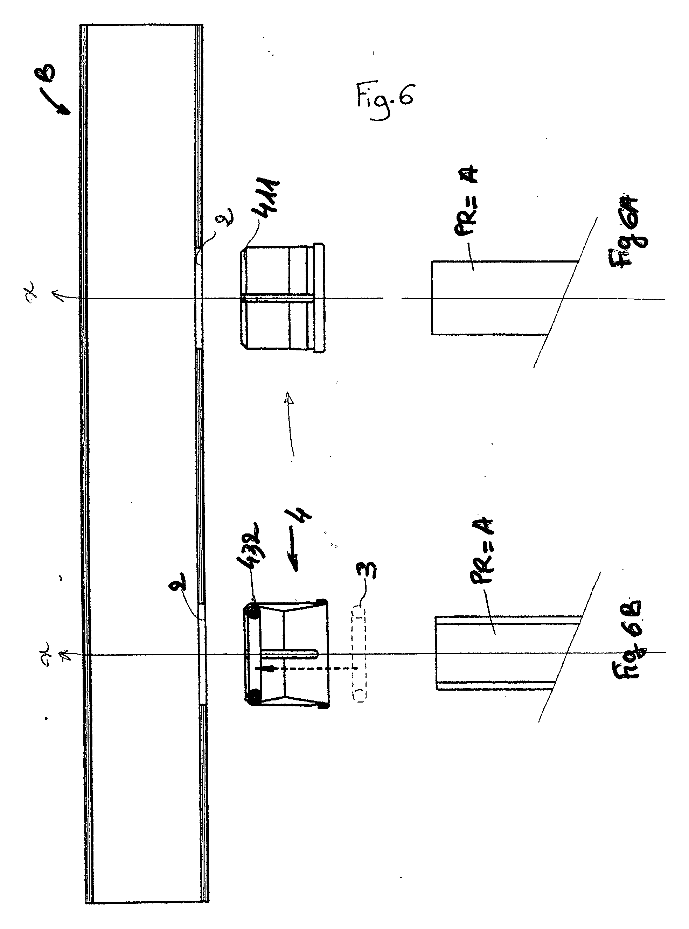

Les figures 6A et 6B montrent l'insertion du joint torique 3 à l'intérieur du corps creux 4 au niveau de la partie torique 432 interne, de manière à maintenir et loger le joint torique dans cette partie 432.

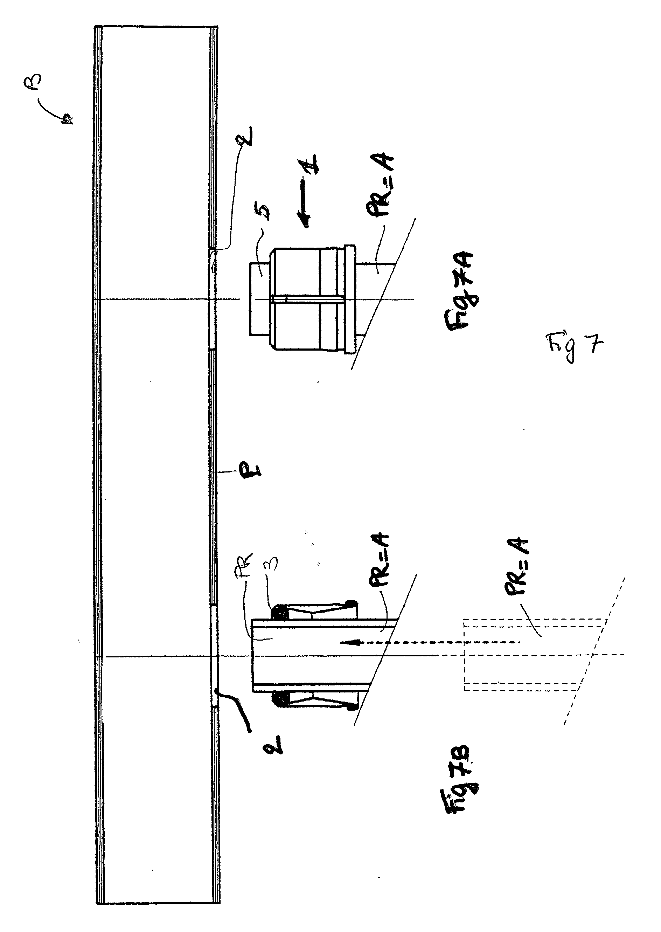

Les figures 7A et 7B présentent l'insertion de la pièce A à l'intérieur du corps creux de la position indiquée en traits pointillés dans le sens indiqué par la flèche (figure 7B) sur la figure, pour obtenir une pièce A insérée dans le corps creux 4 du dispositif selon l'invention (figure 7A), de manière à ce que la pièce A coulisse librement dans le volume intérieur dudit corps creux 4 avec frottement de la surface extérieure de ladite pièce sur le joint torique 3, sans contact avec la surface intérieure du corps creux 4. La pièce intermédiaire fait saillie hors du corps creux 4. Cet ensemble forme le dispositif 1 selon l'invention.

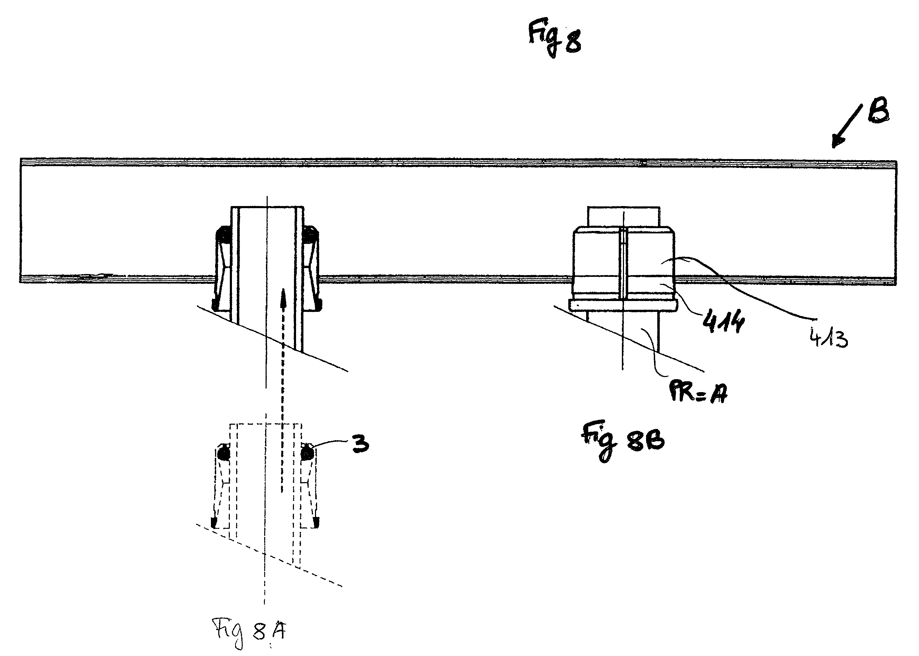

La figure 8A montre l'insertion du corps creux 4 renfermant le joint torique 3 et la pièce A formant le dispositif 1 selon l'invention. Sur la figure 8B, l'insertion du dispositif 1 a lieu jusqu'à la frontière délimitée par la partie centrale cylindrique 413 et la partie centrale conique déformable 414.

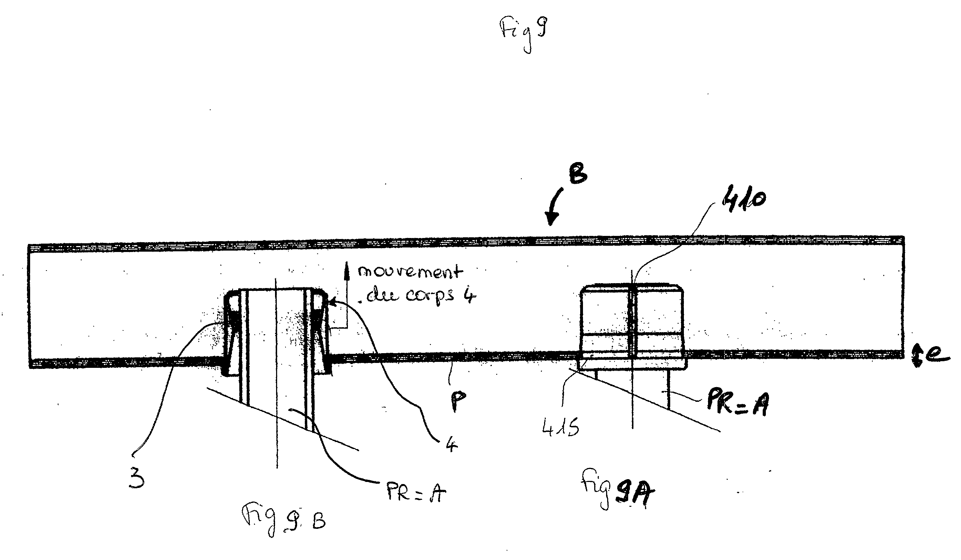

Puis la partie centrale conique déformable 414 du corps creux 4 est insérée à l'intérieur de l'orifice 2 de la pièce B, alors que la pièce A et le joint torique 3 restent immobiles (voir figures 9A et 9B). Seul le corps creux 4 pénètre plus en avant dans l'orifice 2.

De plus, l'insertion de ladite partie centrale conique 414 s'accompagne d'une déformation de cette même partie 414 grâce aux quatre rainures 410 prévue sur la surface externe du corps creux 4, jusqu'à ce que la gorge 415 du corps creux, présentant un diamètre sensiblement identique à celui de l'orifice 2 coïncide avec l'orifice 2.

L'épaisseur e de la paroi P de la pièce B étant de plus sensiblement identique à la hauteur de la gorge 415, le corps creux 4 est verrouillé dans l'orifice 2 de la pièce B. La fixation du dispositif 1 selon l'invention avec l'orifice 2 de la pièce B est irréversible : c'est-à-dire qu'elle ne peut pas être rompue, sauf par destruction.

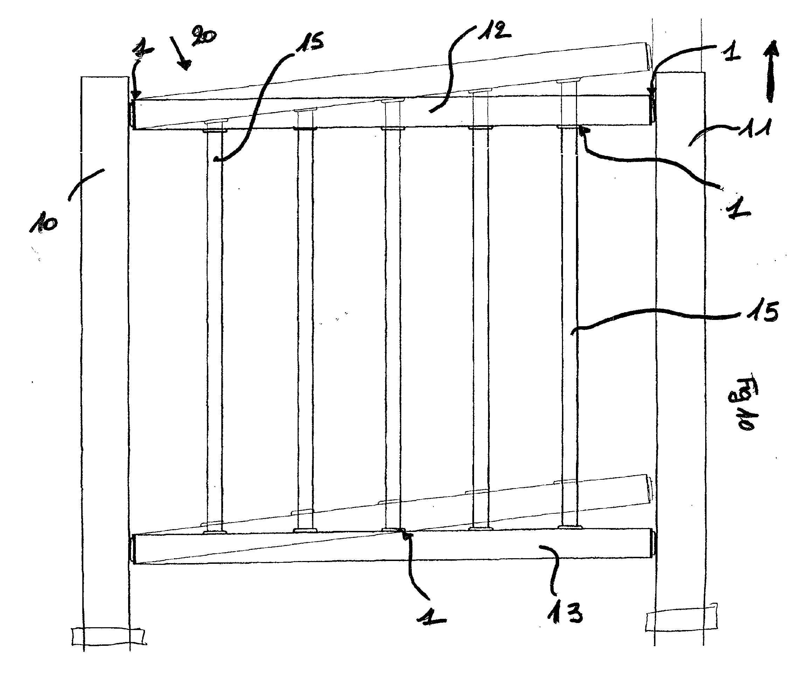

La figure 10 présente une barrière flexible 20 selon l'invention avec deux poteaux verticaux 10 et 11 fixables au sol, deux barres horizontales 12 et 13 reliées à chaque poteau vertical et munies à chaque extrémité d'un dispositif 1 selon l'invention, et la barrière comporte de plus des barreaux verticaux 15 reliés à chaque barre horizontale 12 et 13 par un dispositif 1 selon l'invention.

La barrière est flexible car elle peut s'incliner dans toutes les directions de manière à s'adapter aux courbures et inclinaisons du terrain. La figure 10 montre cette possibilité d'inclinaison de la barrière 20 dans le sens indiqué par la flèche sur la figure.

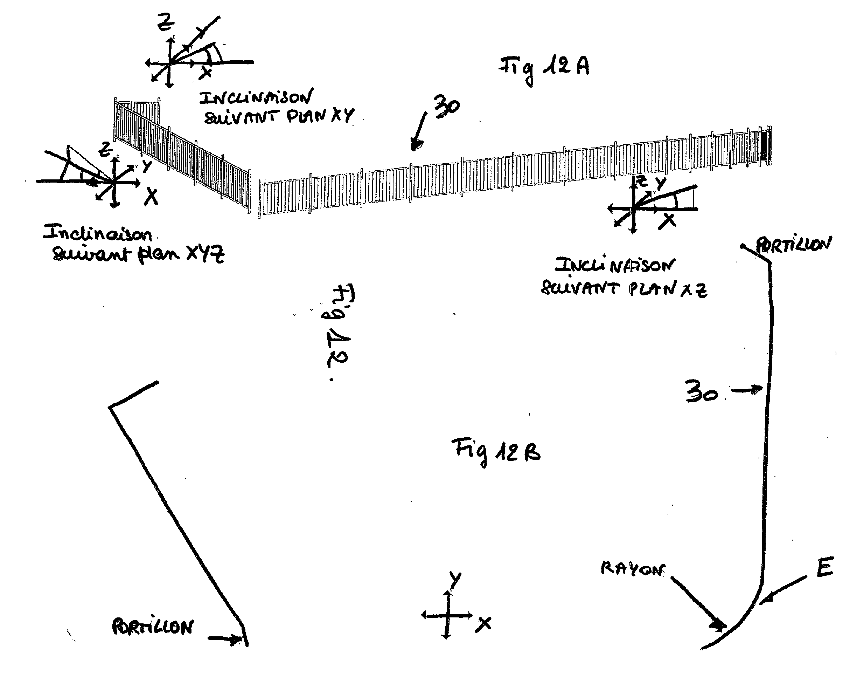

La figure 11 présente une clôture 30 formée de deux barrières comme celles décrites sur la figure 10, et qui sont reliées entre elles par deux moyens rigides D du type soudure, ou bien par deux dispositifs 1 selon l'invention. Dans ce dernier cas, chaque barrière 20 est flexible l'une par rapport à l'autre.

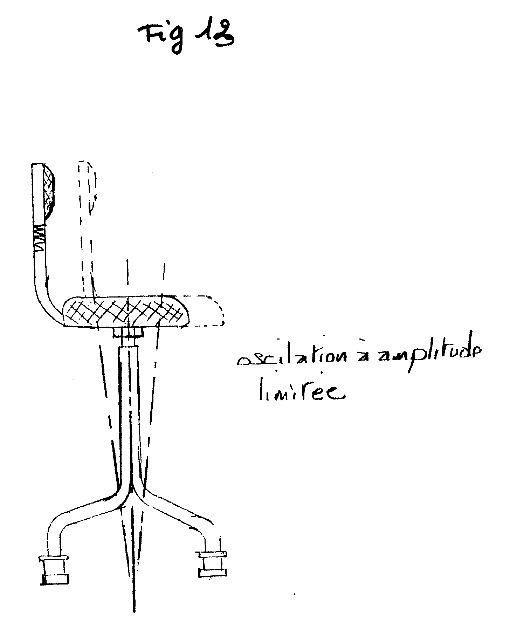

La figure 12A présente une clôture 30 selon l'invention comportant plusieurs barrières 20 munies de dispositifs 1 selon l'invention. la figure 12B illustre une vue de dessus de ladite clôture, qui peut s'incliner suivant un cercle E.

Comme indiqué sur les figures 12A et 12B, la clôture peut s'incliner suivant les plans XY, XYZ, XZ, c'est-à-dire selon trois directions différentes.

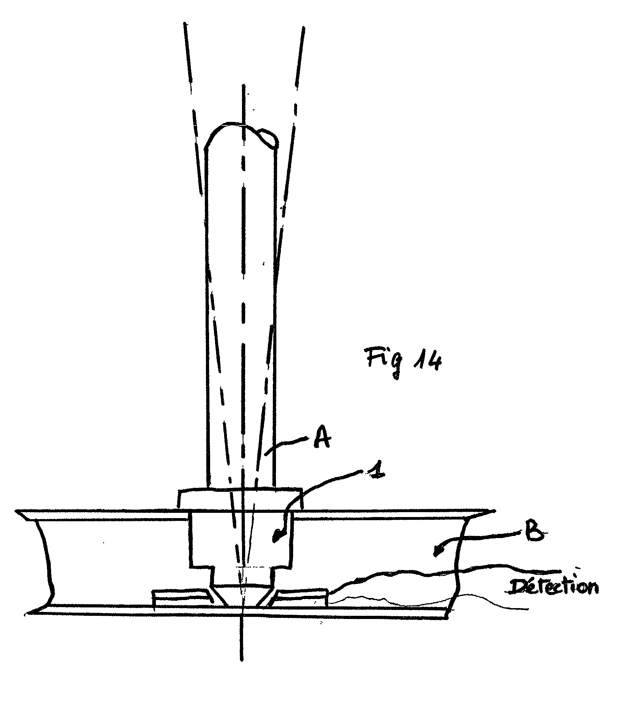

La figure 13 représente un siège, en particulier un siège de bureau comportant un dispositif 1 selon l'invention, permettant de faire osciller le siège tout en limitant l'amplitude d'oscillation.

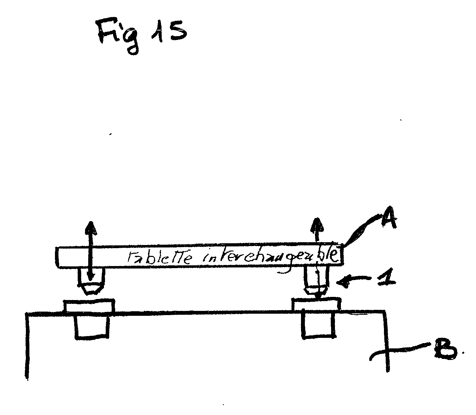

La figure 14 représente une barrière comportant un dispositif 1 selon l'invention inséré dans l'orifice d'une pièce B munie d'un système de détection, qui est actionné lorsque la pièce A se met à osciller. Le dispositif sert à la détection des oscillations et donc à la prévention de certaines zones géographiques.

Cet élément peut ainsi servir à protéger des zones à risques telles que des piscines en permettant de détecter des mouvements de ladite barrière équipée d'un dispositif 1 ou d'une clôture 30 munie de telles barrières, lorsque qu'un tiers tente d'escalader ces dernières. Il sert également à protéger des zones de pêche interdites au public.

Par ailleurs, une telle barrière électrifiée munie de batteries électriques et équipée de dispositifs selon l'invention peut être utilisée pour clôre un terrain agricole. Le dispositif détectera des oscillations lorsqu'une personne ou un animal tentera d'escalader ou touchera ladite barrière , ce qui provoquera la mise en marche des batteries électriques. Ainsi, les batteries n'ont pas besoin d'être en fonctionnement tout le temps, ce qui permet de faire des économies d'énergies.

La figure 15 représente une tablette interchangeable A munie du dispositif 1 selon l'invention, en particulier une table de contrôle ou un mélangeur de laboratoire, absorbant les vibrations résiduelles ou amplifiant les vibrations fonctionnelles.

L'invention couvre également tous les modes de réalisation et toutes les applications qui seront directement accessibles à l'homme de métier à la lecture de la présente demande, de ses connaissances propres.

## Revendications

1. Dispositif pour rendre solidaire une première pièce A avec une seconde pièce B orientée dans le sens x selon un angle φ par rapport à la pièce A, la pièce B étant pourvue d'une cavité 2, tout en permettant une oscillation de la pièce A par rapport à la pièce B **caractérisé en ce que** ledit dispositif comporte
- un corps creux 4 de géométrie et de dimensions adaptées à la cavité 2 de telle sorte que ledit corps creux 4 puisse pénétrer et se fixer dans la cavité 2, ledit corps creux 4 comportant des moyens de fixation ME2 adaptés à coopérer avec ladite cavité 2,
- au moins un élément élastique 3 de forme et de géométrie adaptées pour se maintenir et se loger à l'intérieur dudit corps creux 4 et en formant une protubérance 5 hors du corps creux 4, par coopération avec des moyens de maintien et de logement MML prévus sur la surface interne dudit corps creux 4
- et une pièce intermédiaire PR dont la dimension et la géométrie sont adaptées pour que ladite pièce PR puisse coulisser librement dans le volume intérieur dudit corps creux 4 avec frottement de la surface extérieure de ladite pièce sur ledit élément élastique 3, sans contact avec la surface intérieure du corps creux 4
- ladite pièce intermédiaire PR étant « sensiblement » positionnée dans le volume intérieur du corps 4, et comportant un moyen de fixation MC1 destiné à coopérer avec un moyen de fixation MC2 prévu sur la pièce A, de manière à fixer la pièce A audit dispositif .

2. Dispositif selon la revendication 1 **caractérisé en ce que** la cavité 2 dans la pièce B est définie comme étant un orifice 2 prévu sur une paroi P d'épaisseur e d'une pièce B creuse .

3. Dispositif selon la revendication 1 ou 2 **caractérisé en ce que** l'orifice 2 est circulaire et présente un diamètre d.

4. Dispositif selon l'une quelconque des revendications 1 à 3 **caractérisé en ce que** le corps creux 4 du dispositif 1 comporte une partie d'extrémité avant 411, adaptée pour positionner ledit dispositif 1 dans la cavité 2 prévue dans la pièce B.

5. Dispositif selon l'une quelconque des revendications 1 à 4 **caractérisé en ce que** le corps creux 4 du dispositif 1 comporte une partie centrale 413, 414, formée d'une partie cylindrique supérieure 413 et d'une partie conique inférieure 414 disposée sous ladite partie 413.

6. Dispositif selon la revendication 5 **caractérisé en ce que** le diamètre de la partie centrale conique 414 est légèrement supérieur au diamètre d de l'orifice 2 de la pièce B et la partie centrale conique 414 est déformable lors de son introduction dans l'orifice 2 pour s'adapter audit diamètre d.

7. Dispositif selon l'une quelconque des revendications 1 à 6 **caractérisé en ce que** le corps creux 4 du dispositif 1 comporte une partie d'extrémité arrière supérieur e415 et inférieure 416.

8. Dispositif selon la revendication 6 **caractérisé en ce que** l'extrémité arrière 416 du dispositif 1 est une collerette, qui empêche ledit dispositif de s'encastrer entièrement dans la cavité 2 de la pièce B de diamètre supérieur au diamètre d de l'orifice 2 de la pièce B.

9. Dispositif selon l'une quelconque des revendications 6 à 8 **caractérisé en ce que** le corps creux 4 du dispositif 1 comporte sur sa surface externe, au moins une rainure 410 d'élasticité disposée dans l'axe x, la rainure 410 permettant au corps 4 de se déformer pour s'adapter au diamètre d.

10. Dispositif selon la revendications 1 à 3 **caractérisé en ce que** le corps 4 du dispositif 1 comporte quatre rainures 410, disposées à 90° autour dudit corps.

11. Dispositif selon l'une quelconque des revendications 1 à 10 **caractérisé en ce que** le corps 4 du dispositif 1 comporte sur sa surface externe un moyen de fixation permettant de fixer ledit corps 4 en position dans la cavité 2 de la pièce B.

12. Dispositif selon l'une quelconque des revendications 1 à 11 **caractérisé en ce que** le corps 4 du dispositif 1 est constitué de matière choisie parmi une matière une matière plastique ,élastique ou métallique.

13. Dispositif selon la revendication 12 **caractérisé en ce que** la matière plastique utilisée pour le corps 4 est choisie parmi le polyamide 6,6 et le polyacétal.

14. Dispositif selon l'une quelconque des revendications 1 à 13 **caractérisé en ce que** le corps creux 4 du dispositif 1 comporte en outre des moyens de maintien et de logement 430,431,432 prévus sur la surface interne du corps creux 4 et adaptés pour loger et maintenir l'élément élastique 3, au niveau de la jonction 500 dans l'élément supérieur 432 et 431.

15. Dispositif selon la revendication 14 **caractérisé en ce que** les moyens de maintien et de logement comporte une partie en cône inférieur 430 de dégagement et une partie représentée par un contre-cône supérieur 431, ces parties 430, 431 étant adaptées pour maintenir l'élément élastique 2 à l'intérieur du corps creux 4, dans le volume 500 délimité en coopération avec une collerette supérieure 432.

16. Dispositif selon la revendication 15 **caractérisé en ce que** la partie 431 représentée par un contre-cône est une multitude de surfaces circulaires de diamètres, qui ont été lissées.

17. Dispositif selon l'une quelconque des revendications 1 à 16 **caractérisé en ce que** les moyens de fixation ME2 prévus sur le corps creux 4 représentent une gorge 415.

18. Dispositif selon la revendication 17 **caractérisé en ce que** la gorge 415 présente une hauteur sensiblement identique à l'épaisseur e de la paroi P de la pièce B, de manière à s'encliqueter dans ladite paroi.

19. Dispositif selon la revendications 17 ou 18 **caractérisé en ce que** le diamètre d de l'orifice correspond sensiblement au diamètre de la gorge 415.

20. Dispositif selon l'une quelconque des revendications 1 à 19 **caractérisé en ce que** la pièce intermédiaire PR comporte des moyens de blocage de ladite pièce PR sur l'élément élastique 3, de manière à bloquer de manière réversible la pièce PR par l'élément élastique 3.

21. Dispositif selon la revendication 20 **caractérisé en ce que** les moyens de blocage représentent une gorge 600 ménagée dans la pièce intermédiaire PR.

22. Dispositif selon l'une quelconque des revendications 1 à 20 **caractérisé en ce que** les moyens de fixation MC1 de la pièce PR représentent un taraudage adapté pour coopérer avec les moyens de fixation MC2 représentant une vis.

23. Dispositif selon l'une quelconque des revendications 1 à 22 **caractérisé en ce que** l'élément élastique 3 est un joint torique.

24. Dispositif selon la revendication 23 **caractérisé en ce que** le joint torique 3 comporte une dureté comprise entre environ 30 et environ 90 shores.

25. Dispositif selon la revendication 23 à 24 **caractérisé en ce que** l'élément élastique 3 est une matière élastique, du type caoutchouc naturel ou nitrile.

26. Dispositif selon l'une quelconque des revendications 1 à 25 **caractérisé en ce que** la pièce A et la pièce intermédiaire PR ne forment qu'une seule pièce.

27. Dispositif selon l'une quelconque des revendications 1 à 26 **caractérisé en ce que** la section transversale de la pièce intermédiaire PR et du corps creux 4 est choisie parmi une section carré, hexagonale, rectangulaire, triangulaire, circulaire, de préférence circulaire et les extrémités de la pièce PR sont choisies parmi des extrémités plates, coniques, tronconiques.

28. Dispositif selon l'une quelconque des revendications 1 à 27 **caractérisé en ce que** la pièce B est une barre à parois P planes.

29. Dispositif selon l'une quelconque des revendications 1 à 28 **caractérisé en ce que** l'angle φ de la pièce B par rapport à la pièce A est compris entre 0° et 180°.

30. Procédé d'assemblage d'une première pièce A avec une seconde pièce B orientée dans le sens x selon un angle φ par rapport à la pièce A, la pièce B étant pourvue d'une cavité 2, tout en permettant une oscillation de la pièce A par rapport à la pièce B, **caractérisé en ce que** ledit procédé comporte :
- la fixation du dispositif 1 selon l'une quelconque des revendications 1 à 29, à la pièce B selon le sens x dans la cavité 2 et la fixation de la pièce A audit dispositif 1 selon l'axe x.

31. Procédé selon la revendication 30 **caractérisé en ce que** la fixation de la pièce B audit dispositif 1 est précédée de
- l'insertion de l'élément élastique 3 dans les moyens de maintien et de logement prévus sur la surface interne du corps creux dudit dispositif
- puis de l'insertion de la pièce intermédiaire PR , à l'intérieur du corps creux 4 dudit dispositif 1, dans l'élément élastique 3, jusqu'à ce que la pièce intermédiaire PR fasse saillie hors du corps creux 4 dudit dispositif 1.

32. Procédé selon la revendication 30 ou 31 **caractérisé en ce que** la fixation du dispositif 1 à la pièce B dans le sens x consiste à
- insérer dans le sens x, le dispositif 1 muni de la pièce intermédiaire PR, dans la cavité 2 de la pièce B et à
- faire coopérer les moyens de fixation ME2 de la pièce intermédiaire PR avec la cavité 2 prévue sur la pièce B.

33. Procédé selon l'une quelconque des revendications 32 **caractérisé en ce que** les moyens de fixation ME2 de la pièce intermédiaire PR coopérant avec ladite cavité 2 sont choisis parmi des moyens de collage, vissage,soudage .

34. Procédé selon la revendication 32 **caractérisé en ce que** l'insertion du dispositif 1 dans la cavité 2 de la pièce B a lieu en deux étapes :
1- insertion ensemble et en même temps dans le sens x, de la partie de la pièce intermédiaire PR faisant saillie, de la partie d'extrémité avant 411, du corps creux 4 et de la partie 413 centrale supérieure cylindrique du corps creux 4, dans l'orifice 2 de la pièce B, jusqu'à la frontière délimitée par la partie centrale cylindrique supérieure 413 et la partie centrale conique inférieure 414 du corps creux 4,
2- puis insertion dans le sens x, de la partie centrale conique inférieure 414 déformable à l'intérieur de la cavité 2 de la pièce B, alors que la pièce intermédiaire PR et l'élément élastique 3 restent immobiles, l'insertion de ladite partie 414 s'accompagnant d'une déformation de cette même partie 414 grâce à au moins une rainure 410 prévue sur la surface externe du corps creux 4, cette insertion ayant lieu jusqu'à coopération des moyens de fixation ME2 avec l'orifice 2.

35. Procédé selon la revendication 33 **caractérisé en ce que** l'insertion de la partie centrale conique 414 à l'intérieur de la cavité 2 est réalisée par l'exercice d'une force appliquée sur la partie arrière 416 du corps creux 4.

36. Procédé selon l'une quelconque des revendications 32 et 34 à 35 **caractérisé en ce que** les moyens de fixation ME2 de la pièce intermédiaire PR sont représentées par une gorge 415, et la coopération des moyens de fixation ME2 avec l'orifice 2, consiste **en ce que** le diamètre de l'orifice 2 correspond à celui de la gorge 415 et la hauteur de la gorge 415 est sensiblement identique à l'épaisseur e de la paroi P, ce qui correspond au verrouillage ou " clipsage " du dispositif 1 dans l'orifice 2.

37. Procédé selon l'une quelconque des revendications 30 à 36 **caractérisé en ce que** la fixation de la pièce A audit dispositif 1 selon l'axe x consiste à fixer la pièce intermédiaire PR à la pièce A, la fixation étant réalisée par la coopération des moyens de fixation MC1 prévus sur la pièce intermédiaire PR avec les moyens de fixation MC2 prévus sur la pièce A.

38. Procédé selon l'une quelconque des revendications 29 à 35 **caractérisé en ce que** l'angle θ est d'environ 11 °.

39. Barrière flexible de type à barreaux horizontaux et verticaux **caractérisée en ce qu'**elle comporte au moins un dispositif selon l'une quelconque des revendications 1 à 29 pour assembler les barreaux horizontaux et chacun des barreaux verticaux , ou **en ce qu'**elle est obtenue par assemblage au moyen du procédé selon l'une quelconque des revendications 30 à 36.

40. Barrière flexible selon la revendication 39 **caractérisée en ce qu'**elle comporte deux poteaux verticaux 10 et 11 fixables au sol, deux barres horizontales 12 et 13 reliées à chaque poteau vertical et étant munies à chaque extrémité d'un dispositif 1 selon l'une quelconque des revendications 1 à 29, et ladite barrière comporte des barreaux verticaux 15 reliés à chaque barre horizontale 12 et 13 par un dispositif 1 selon l'une quelconque des revendications 1 à 29.

41. Clôture flexible **caractérisée en ce qu'**elle comporte au moins deux barrières selon la revendication 39 ou 40 et dans laquelle lesdites barrières sont reliées entre elles par au moins un moyen de fixation D rigide choisi par des points de soudure, de colle.

42. Clôture flexible **caractérisée en ce qu'**elle comporte au moins deux barrières selon la revendication 39 ou 40 et dans laquelle lesdites barrières sont reliées entre elles par au moins un dispositif 1 selon l'une quelconque des revendications 1 à 29.

43. Présentoir flexible **caractérisé en ce qu'**il comporte un dispositif selon l'une quelconque des revendications 1 à 28 pour relier au moins une partie des éléments constitutifs du présentoir, ou est obtenu par assemblage au moyen du procédé selon l'une quelconque des revendications 29 à 36.

44. Siège et bureau flexible **caractérisé en ce qu'**il comporte un dispositif selon l'une quelconque des revendications 1 à 28 pour relier au moins une partie des éléments constitutifs du siège ou est obtenu par assemblage au moyen du procédé selon l'une quelconque des revendications 29 à 36.

45. Tablette interchangeable flexible **caractérisée en ce qu'**elle comporte un dispositif selon l'une quelconque des revendications 1 à 28 pour relier au moins une partie des éléments constitutifs de la tablette ou est obtenue par assemblage au moyen du procédé selon l'une quelconque des revendications 29 à 36.

46. Appui-tête flexible **caractérisé en ce qu'**il comporte un dispositif selon l'une quelconque des revendications 1 à 28 pour relier au moins une partie des éléments constitutifs du siège ou est obtenu par assemblage au moyen du procédé selon l'une quelconque des revendications 29 à 36.

47. Lampe flexible **caractérisée en ce qu'**elle comporte un dispositif selon l'une quelconque des revendications 1 à 28 pour relier au moins une partie des éléments constitutifs de la tablette ou est obtenue par assemblage au moyen du procédé selon l'une quelconque des revendications 29 à 36.

48. Application du dispositif selon l'une quelconque des revendications 1 à 29 à la protection de zones interdites au public par détection d'oscillations dudit dispositif.

49. Application du dispositif selon l'une quelconque des revendications 1 à 29 à une barrière électrifiée munie de batteries électriques qui se mettent en marche lorsque ledit dispositif détecte des oscillations de ladite barrière.
